# EUROPÄISCHE PATENTANMELDUNG

(11) **EP 4 427 563 A1**
(43) Veröffentlichungstag der Anmeldung: **11.09.2024**
(21) Anmeldenummer: 23161039.5
(22) Anmeldetag: 09.03.2023
(51) Int. Cl.: A01C 3/02, A01F 25/13, E04B 7/08, E04H 5/08

(54) **TRAGEGERÜST FÜR EIN DACH EINES NACH OBEN OFFENEN BEHÄLTERS**

(71) Anmelder: Dobnik, Damijan, 2360 Radlje ob Dravi (SI)
(72) Erfinder: Dobnik, Damijan, 2360 Radlje ob Dravi (SI)
(74) Vertreter: Schwarz & Partner Patentanwälte GmbH

(57) **Zusammenfassung**

Die Erfindung betrifft ein Tragegerüst (1) für ein Dach (2) für einen nach oben offenen Behälter (3), insbesondere für einen Behälter (3) für landwirtschaftliche Betriebsmittel wie Jauche, mit mehreren, sich in einem Schnittpunkt (4) kreuzenden Trägern (5), wobei jeder der Träger (5) zumindest ein freies Ende (6) aufweist, welches mit dem Behälter (3) verbindbar ist, wobei das Tragegerüst (1) eine Strebe (8) für eine selbsttragende Dachplane (9) aufweist, wobei sich die Strebe (8) vom Schnittpunkt (4) der Träger (5) im Wesentlichen vertikal nach oben erstreckt, um dort einen Montagepunkt (9') für eine selbsttragende, von den Trägern beabstandete Dachplane (9) zu bilden.

## Beschreibung

Die Erfindung betrifft ein Tragegerüst für ein Dach eines nach oben offenen Behälters, ein Dach für einen nach oben offenen Behälter und einen derartigen Behälter mit einem Tragegerüst für ein Dach.

In landwirtschaftlichen Betrieben werden nach oben offene Behälter eingesetzt, um verschiedene landwirtschaftliche Betriebsmittel zu lagern. Eine Hauptanwendung derartiger Behälter besteht in der Lagerung von Jauche, welche zur Düngung von Feldern verwendet wird. Allerdings können auch Schüttgüter oder andere flüssige Stoffe in diesen Behältern gelagert werden, sodass der Behälter insbesondere auch im industriellen Bereich eingesetzt werden kann.

Herkömmlicherweise sind derartige Behälter nach oben hin geöffnet. Allerdings führt dies, vor allem im Fall von Jauchelagerung, zu einer erhöhten Geruchsbelästigung in der Umgebung des Behälters. Zudem ist der Behälterinhalt hierdurch Umwelteinflüssen ausgesetzt.

Um dies zu vermeiden sind am Markt verschiedene Möglichkeiten verfügbar, um eine Abdeckung oder ein Dach an nach oben offenen Behältern vorzusehen.

Beispielsweise kann, wie in der DE 3 436 933 A1 offenbart, in einem zentralen Punkt des Behälters eine mit dem Behälterboden verbundene, vertikale Strebe vorgesehen werden, welche sich über den oberen Behälterrand erstreckt. Diese kann dann genutzt werden, um eine Plane über den Behälter zu spannen, und ein improvisiertes Dach anzufertigen. Ein Nachteil eines derartigen improvisierten Behälterdachs besteht jedoch darin, dass wenn der Behälter gefüllt wird, die vertikale Strebe in den Behälterinhalt eintaucht. Da der Behälterinhalt jedoch oftmals aggressive und korrosive Substanzen enthält führt dies dazu, dass die Strebe von dem Behälterinhalt auf Dauer angegriffen wird, und die Haltbarkeit eines derartigen improvisierten Dachs nur eingeschränkt gegeben ist.

Die EP 2 826 353 B1 offenbart ein selbsttragendes Tragegerüst für ein selbsttragendes Dach eines oben offenen Behälters. Dieses Tragegerüst aus dem Stand der Technik ist in Form einer Kuppel mit Längsträgern und Querträgern ausgestaltet, welche auf eine Oberkante des Behälters aufgesetzt wird. Der Vorteil eines derartigen selbsttragenden Dachs besteht darin, dass dieses einfach auf den oberen Behälterrand aufgesetzt werden kann, und keine Komponenten umfasst, welche in den Behälterinhalt eintauchen. Allerdings weist eine solche Konstruktion einen komplexen Aufbau mit einer Vielzahl einzelner Komponenten, sowie ein hohes Gewicht auf. Dies führt zudem zu hohen Kosten für derartige selbsttragende Dächer.

Die Aufgabe der vorliegenden Erfindung besteht somit darin diese Nachteile des Standes der Technik zu vermeiden und insbesondere ein Tragegerüst für einen nach oben offenen Behälter zu schaffen, das einerseits einen geringen Materialbedarf aufweist und andererseits möglichst korrosionsbeständig ist.

Erfindungsgemäß wird die vorliegende Aufgabe durch die Bereitstellung eines Tragegerüsts für ein Dach für einen nach oben offenen Behälter gelöst, insbesondere für einen Behälter für landwirtschaftliche Betriebsmittel wie Jauche, mit mehreren, sich in einem Schnittpunkt kreuzenden Trägern, wobei jeder der Träger zumindest ein freies Ende aufweist, welches mit dem Behälter verbindbar ist, wobei das Tragegerüst eine Strebe für eine selbsttragende Dachplane aufweist, wobei sich die Strebe vom Schnittpunkt der Träger im Wesentlichen vertikal nach oben erstreckt, um dort einen Montagepunkt für eine selbsttragende, von den Trägern beabstandete Dachplane zu bilden.

Durch die erfindungsgemäße Konstruktion des Tragegerüsts wird vermieden, dass Komponenten des Tragegerüsts mit dem Behälterinhalt im montierten Zustand permanent in Kontakt stehen. Hierdurch wird die Lebensdauer des Tragegerüsts verbessert. Des Weiteren wird eine leichte und gleichzeitig robuste Konstruktion des Tragegerüsts erreicht, da die Träger nur als Unterkonstruktion für die Strebe dienen sollen, und keine unmittelbare Auflage für die Dachplane bilden sollen.

Im Vergleich zu Konstruktionen wie in der EP 2 826 353 B1 wird somit weitaus weniger Material benötigt, da keine Querstreben benötigt werden. Die erfindungsgemäße Lösung unterschiedet sich von der EP 2 826 353 B1 jedoch insbesondere auch durch die Funktionsweise, da die Dachplane bei der erfindungsgemäßen Lösung nicht auf den Trägern selbst aufliegt, sondern zwischen der Strebe und dem Behälter gespannt ist.

Ein weiterer Vorteil der erfindungsgemäßen Konstruktion ist, dass die Art und Anzahl der Träger frei wählbar ist und es daher gut möglich ist, das Tragegerüst an die jeweils statischen Erfordernisse auszulegen. Hierfür wird üblicherweise eingangs eine erwartete Schneelast und/oder Windlast herangezogen, die vom jeweiligen Standort des Behälters abhängig sein können. Auf dieser Grundlage wird die statische Berechnung durchgeführt, und das erfindungsgemäße Tragegerüst kann entsprechend dimensioniert und ausgewählt werden.

In einer besonders bevorzugten Ausführungsform sind zumindest einige Träger des Tragegerüsts im Wesentlichen in einer Ebene angeordnet, wobei bevorzugt alle Träger des Tragegerüsts oder zumindest die untersten Träger des Tragegerüsts im Wesentlichen in einer Ebene angeordnet sind. Eine derartige ebene Konstruktion ist besonders bevorzugt, da die Träger hierbei so kurz wie möglich ausgestaltet werden können und ein Abstand zur Dachplane gewährleistet wird.

Alternativ zur vorgenannten Ausführungsform könnte auch vorgesehen sein, dass zumindest einige Träger des Tragegerüsts in einer Pyramidenform oder Kegelform angeordnet sind, dessen Spitze den Schnittpunkt bildet und über den freien Enden angeordnet ist, wobei bevorzugt alle Träger des Tragegerüsts oder zumindest die untersten Träger des Tragegerüsts in einer Pyramidenform oder Kegelform angeordnet sind. Dies kann vorteilhaft sein, um eine bessere Krafteinleitung des Daches in den Behälter zu erzielen. Da die Strebe von der Spitze der genannten Form vertikal nach oben steht, wird die Durchplane aber weiterhin über der durch die Träger gebildete Form vorliegen, sodass die eingangs erwähnten Vorteile auch bei dieser Ausführungsform gegeben sind und die Dachplane die Träger insbesondere nicht berührt.

In einer Ausführungsform kann vorgesehen werden, dass die Träger Profilträger, bevorzugt I-Träger, H-Träger, insbesondere HEA-Träger, oder T-Träger, sind. Dies ist insbesondere dann vorteilhaft, wenn die Träger nicht Teil von Fachwerkskonstruktionen sind, da durch die Profilträger eine ausreichende Stabilität in vertikaler Richtung erzielt wird. Weiters könnten die Träger auch Vollträger sein und z.B. eine quadratische oder runde Querschnittsfläche aufweisen.

Insbesondere für große Behälterdurchmesser ist jedoch bevorzugt, wenn die die Träger Teil von Fachwerkskonstruktionen sind, die in im Wesentlichen vertikalen Ebenen liegen. Hierdurch wird die Stabilität in vertikaler Richtung erhöht, wodurch das Tragegerüst robuster ausgeführt werden kann. Die Höhe der Fachwerkskonstruktionen hängt vom jeweiligen Durchmesser des Behälters bzw. vom erwarteten Gewicht der Dachplane ab.

In der vorgenannten Ausführungsform ist weiters bevorzugt, wenn die Fachwerkskonstruktionen im Bereich des freien Endes eine geringere Höhe aufweisen als im Bereich des Schnittpunkts. Hierdurch nehmen die Fachwerkskonstruktionen im Bereich der Oberkante der Außenwand des Behälters einen geringeren Raum ein, wodurch der Zugang zu dem Behälterinhalt vereinfacht wird. Weiters kann die an der Dachplane und folglich an der Strebe auftretende Kraft mit einer derartigen Konstruktion gezielt in den Behälter eingeleitet werden, wobei gleichzeitig das benötigte Material gering gehalten werden kann.

Vorzugsweise weist das Tragegerüst zudem vier jeweils gleich lange Träger oder Fachwerkskonstruktionen auf, welche sich ausgehend von dem Schnittpunkt in regelmäßigen Abständen nach außen erstrecken. Die Unterkanten der Träger oder Fachwerkskonstruktionen liegen bevorzugt in einer gemeinsamen Ebene. Hierdurch wird die Stabilität des Tragegerüsts verbessert und ein sicherer Sitz des Tragegerüsts auf dem Behälter gewährleistet. Für größere Behälterdurchmesser kann jedoch auch vorgesehen werden, dass z.B. sechs, acht oder mehr Träger oder Fachwerkskonstruktionen vorgesehen werden, deren Unterkanten bevorzugt in einer gemeinsamen Ebene liegen.

Zur weiteren Erhöhung der Stabilität des Tragegerüsts können die Träger und/oder die Strebe zumindest teilweise aus Stahl gefertigt werden. Je nach den vorliegenden Anforderungen könnten diese jedoch auch aus Holz, Kunststoff oder anderen Materialen gefertigt werden.

Auch wenn die Träger und die Strebe nicht in den Behälterinnenraum ragen, ist bevorzugt, wenn die Träger und/oder die Strebe verzinkt, lackiert oder mit einer sonstigen Antikorrosionsbeschichtung versehen werden. Dadurch werden diese Elemente auch gegen Dämpfe oder geringfügige Befleckungen des im Behälter vorliegenden Betriebsmittels geschützt.

Besonders bevorzugt ist, wenn das Tragegerüst zumindest eine Verstärkungsstrebe umfasst, die sich zwischen der Strebe und einem Träger oder einer Fachwerkskonstruktion erstreckt, wobei bevorzugt für jeden Träger oder für jede Fachwerkskonstruktion eine Strebe vorgesehen ist. Wenn das Tragegerüst somit beispielsweise vier Träger oder vier Fachwerkskonstruktionen umfasst, können vier Verstärkungsstreben eingesetzt werden, um die symmetrisch Strebe zu stützen. Die Verstärkungsstreben liegen üblicherweise in einer gemeinsamen vertikalen Ebene mit dem jeweiligen Träger oder der jeweiligen Fachwerkskonstruktion. Die Verstärkungsstreben haben den Vorteil, dass die Strebe unterstützt werden kann und diese damit dünner oder länger ausgestaltet werden kann.

Die vorliegende Aufgabe der Erfindung wird zudem durch die Bereitstellung eines Dachs für einen nach oben offenen Behälter mit einem erfindungsgemäßen Tragegerüst gelöst, wobei das Dach die Dachplane umfasst. Die Mitte der Dachplane kann hierbei am Montagepunkt an der Strebe montiert werden und die Seiten der Dachplane können am Behälter montiert werden. Hierdurch wird eine Abdeckung für den Behälter bereitgestellt, welche den Behälterinhalt vor Umwelteinflüssen schützt. Vorzugsweise umfasst die Dachplane ein polyesterbeschichtetes oder PVC-beschichtetes Gewebe. Hierdurch wird eine besonders widerstandsfähige Dachplane bereitgestellt.

Erfindungsgemäß kann das hierin beschriebene Tragegerüst auch für unterschiedlichste Behältertypen eingesetzt werden, wobei lediglich eine Anpassung der Dachplane vorgenommen werden muss. Hat der Behälter beispielsweise eine runde Querschnittsfläche, d.h. in einer Draufsicht eine runde Form, so wird eine Dachplane herangezogen, die im gespannten Zustand zwischen Strebe und Behälter eine Kegelform einnimmt. Hat der Behälter jedoch beispielsweise eine rechteckige oder quadratische Querschnittsfläche, d.h. in einer Draufsicht eine rechteckige oder ovale Form, so wird eine Dachplane herangezogen, die im gespannten Zustand zwischen Strebe und Behälter eine Pyramidenform einnimmt.

Die Dachplane der vorliegenden Erfindung hat beispielsweise ein Flächengewicht von 670 g/m², was für die selbsttragenden Eigenschaften der Dachplane vorteilhaft ist. Weitere bevorzugte Flächengewichte sind 200 bis 1500 g/m² oder 500 bis 800 g/m². Im Allgemeinen hängt dies jedoch vom Anwendungsfall und von den statischen Erfordernissen ab, sodass von diesen Werten auch abgewichen werden kann. Je nach Anforderung könnten auch Dachplanen mit Flächengewichten von mehr als 1500 g/m² eingesetzt werden.

Die vorliegende Aufgabe wird darüber hinaus durch einen Behälter mit einem erfindungsgemäßen Tragegerüst gelöst, wobei die freien Enden der Träger des Tragegerüsts mit dem Behälter verbunden sind, und die Dachplane zwischen der Strebe und dem Behälter gespannt ist.

Vorteilhafte Ausgestaltungen des erfindungsgemäßen Tragegerüsts, des Dachs und des Behälters, sowie alternative Ausführungsvarianten werden in weiterer Folge anhand der Figuren näher erläutert.
Figur 1 zeigt einen nach oben offenen Behälter mit einem erfindungsgemäßen Tragegerüst einer ersten Ausführungsform in einer perspektivischen Ansicht.
Figur 2 zeigt den zeigt den Behälter gemäß Figur 1 mit dem Tragegerüst in einer Draufsicht.
Figur 3 zeigt den Behälter gemäß Figur 1 in einer Seitenansicht.
Figur 4 zeigt einen nach oben offenen Behälter mit einem erfindungsgemäßen Tragegerüst einer zweiten Ausführungsform in einer perspektivischen Ansicht.
Die Figuren 5 und 6 zeigen eine weitere Ausführungsform des erfindungsgemäßen Tragegerüsts mit Verstärkungsstreben.
Die Figuren 7 und 8 zeigen eine weitere Ausführungsform des erfindungsgemäßen Tragegerüsts mit schräg angeordneten Trägern.
Die Figuren 9 und 10 zeigen eine weitere Ausführungsform des erfindungsgemäßen Tragegerüsts mit schräg angeordneten Trägern und Verstärkungsstreben.
Die Figur 11 zeigt eine weitere Ausführungsform des erfindungsgemäßen Tragegerüsts mit schräg angeordneten Trägern und einem Verbindungsträger.

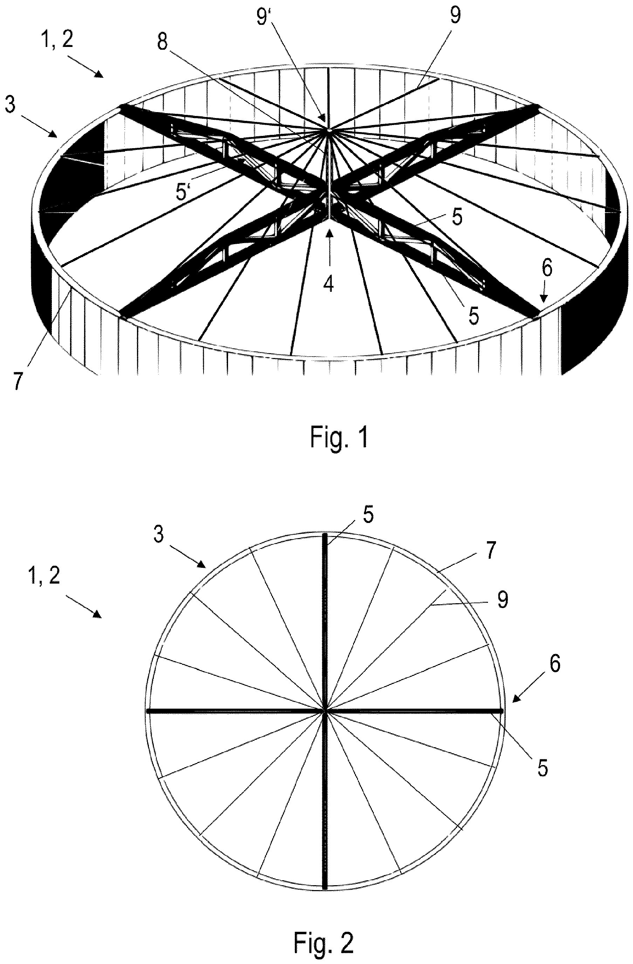

Figur 1 zeigt einen Behälter 3, der zur Lagerung von landwirtschaftlichen Betriebsmitteln eingesetzt wird. Ein derartiger Behälter 3 kann beispielsweise als Jauchebehälter eingesetzt werden und beinhaltet oft ammoniakhaltige oder andere korrosive Stoffe. Alternativ könnte der Behälter 3 auch zur Lagerung von industriellen Betriebsmitteln vorgesehen sein. Das im Folgenden beschriebene Tragegerüst 1 ist jedoch nicht auf die konkrete Verwendung des Behälters 3 beschränkt.

Der Behälter 3 kann beispielsweise aus Beton bestehen, da sich dieses Material einerseits gut zur Lagerung von landwirtschaftlichen Betriebsmitteln eignet. Andererseits können Behälter 3 aus Beton auch schnell und kostengünstig konstruiert werden. In der Regel wird die Außenwand des Behälters 3 zylindrisch ausgebildet. In anderen Alternativen könnte der Behälter 3 aber auch eine andere Form aufweisen, beispielsweise eine ovale, quadratische oder rechteckige Form, gesehen in der Draufsicht von Figur 2. Bei derartigen Behältern 3 wird üblicherweise von "nach oben offenen Behältern" gesprochen, auch wenn diese mit dem im Folgenden erläuterten Dach 2 abgedeckt werden. Die Behälter 3 haben bevorzugt einen Durchmesser von 5 m bis 30 m oder von 8 m bis 25 m. Hiervon kann jedoch auch abgewichen werden.

Um den nach oben offenen Behälter 3 abzudecken, wird ein Dach 2 mit einem Tragegerüst 1 auf dem Behälter 3 vorgesehen. Hierdurch wird verhindert, dass sich Regenwasser im Behälter 3 sammelt, was die Jauche verdünnen würde, und weiters ist auch eine erhöhte Sicherheit gegeben, da keine Personen oder Tiere in den Behälter fallen können. In der Praxis können bestehende Behälter 3 mit dem dargestellten Dach 2 mit Tragegerüst 1 nachgerüstet werden oder das Dach 2 mit Tragegerüst 1 kann bereits unmittelbar nach oder während der Herstellung des Behälters 3 auf diesem montiert werden.

Das Tragegerüst 1 umfasst mehrere Träger 5, die radial von einem Mittelpunkt des Tragegerüsts 1 ausgehen. Die Träger 5 (oder Gruppen von Trägern 5, die als Fachwerkskonstruktionen bezeichnet werden) sind in gleichen Winkelabständen zueinander angeordnet. In anderen Worten kreuzen sich die Träger 5 an einem Schnittpunkt 4, bzw. an einer im Wesentlichen vertikalen Symmetrieachse, des Tragegerüsts 1. Die Träger 5 bzw. Fachwerkskonstruktionen sind jeweils gleich lang ausgebildet, sodass die freien Enden 6 der Träger 5, die nicht am Schnittpunkt 4 liegen, entlang eines Kreises vorliegen. Dadurch kann das Tragegerüst 1 auf den zylindrischen Behälter 3 aufgesetzt oder in diesen eingesetzt werden. Die freien Enden 6 der Träger 5 können sodann in geeigneter und an sich bekannter Weise mit dem Behälter 3 verbunden werden. Die freien Ende 6 könnten beispielsweise eine Verbindung mit einer Oberkante 7 einer Außenwand des Behälters 3 eingehen. Die Verbindung kann insbesondere mittels Bolzen oder Dübeln erfolgen. Alternativ kann auch ein Schuh oder eine Geometrie am freien Ende 6 vorgesehen sein, welche eine Auflage und/oder Abstützung des jeweiligen Trägers 5 an der Oberkante 7 der Außenwand des Behälters 3 ermöglicht.

Beispielsweise werden, wie in den Figuren 1 bis 4 gezeigt, vier Träger 5 (bzw. vier Fachwerkskonstruktionen, welche die Träger 5 umfassen) vorgesehen, wobei jeweils zwei Träger 5 bzw. Fachwerkskonstruktionen einen gegenseitigen Winkel von 90° bezüglich des Schnittpunkts 4 aufweisen. Genauso könnten jedoch auch sechs, acht oder mehr Träger 5 bzw. Fachwerkskonstruktionen eingesetzt werden. Bei dem erfindungsgemäßen Tragegerüst 1 werden üblicherweise keine Querstreben eingesetzt, welche jeweils zwei radial ausgehende Träger 5 in Umfangsrichtung um den Schnittpunkt 4 miteinander verbinden.

Die radial ausgehenden Träger 5 bilden einen stabilen Untergrund für eine Strebe 8, die sich ausgehend vom Schnittpunkt 4 vertikal nach oben erstreckt. Am oberen Ende der Strebe 8 kann eine Dachplane 9 an einem Montagepunkt 9` befestigt werden, sodass die Dachplane 9 vom Montagepunkt 9'an der Strebe 8 zum Behälter 3 (üblicherweise zur Oberkante 7 des Behälters 3) gespannt werden kann, wo die Seiten der Dachplane 9 befestigt werden können. Es ist ersichtlich, dass der Schnittpunkt 4 und der Montagepunkt 9` voneinander beabstandet sind. Die Dachplane 9 kann z.B. aus polyesterbeschichtetem oder PVC-beschichtetem Gewebe bestehen und ist in den Figuren 1 und 2 zur leichteren Darstellung durch Striche angedeutet. Die Dachplane 9 wird als selbsttragende Dachplane 9 bezeichnet, da sie zwischen der Strebe 8 und dem Behälter 3 gespannt ist, ohne dazwischen z.B. auf Trägern 5 aufzuliegen. Die Dachplane 9 ist daher berührungslos zwischen der Strebe 8 und dem Behälter 3 gespannt.

Eine derartige Anordnung der Dachplane 9 ermöglicht, dass sich alle Träger 5 vollständig unter der Dachplane 9 befinden. Die Dachplane 9 wird daher nicht unmittelbar auf den Trägern 5 aufliegen. Die Träger 5 bilden somit lediglich eine Basis für die Strebe 8 und nicht unmittelbar für die Dachplane 9. Durch diese Konstruktion 1 wird eine hohe Robustheit bei gleichzeitig geringen Produktionskosten erreicht. Des Weiteren wird ein Kontakt der Komponenten des Tragegerüsts 1 mit einem in den Figuren nicht ersichtlichen Inhalt des Behälters 3 vermieden.

Sollte der Behälter in der Draufsicht von Figur 2 keine runde Form haben, sondern beispielsweise eine ovale, quadratische oder rechteckige Form, so kann weiterhin dasselbe Tragegerüst 1 eingesetzt werden, gegebenenfalls angepasst an die statischen Erfordernisse. Es wird sich lediglich die Form der Dachplane 9 ändern, sodass diese mit der Form des Behälters 3 kompatibel ist. Beispielsweise wird die Dachplane 9 derart gefertigt, dass diese eine Pyramidenform aufweist, wenn diese vom Montagepunkt 9` zu einem quadratischen oder rechteckigen Behälter gespannt ist.

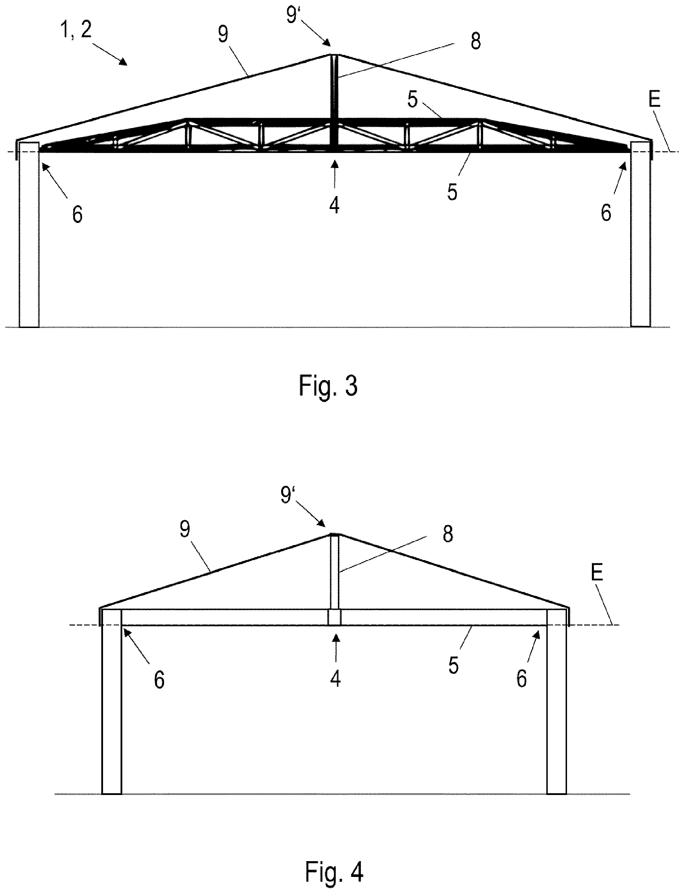

Beim Vergleich der ersten Ausführungsform, die in den Figuren 1 bis 3 ersichtlich ist, mit der zweiten Ausführungsform, die in Figur 4 ersichtlich ist, ist erkennbar, dass die Träger 5 in der ersten Ausführungsform der Figuren 1 bis 3 jeweils Teil einer Fachwerkskonstruktion sind. Die Fachwerkskonstruktionen sind jeweils derart ausgestaltet, dass sie in entsprechenden vertikalen Ebenen liegen. In anderen Worten befinden sich mehrere Träger 5 innerhalb einer vertikalen Ebene, die durch einen der Träger 5 verläuft. Insbesondere ist auch aus der Draufsicht aus Figur 2 ersichtlich, dass die Fachwerkskonstruktionen keine Querverbindung zwischen den radial ausgehenden Trägern 5 bilden. Wie zuvor erwähnt liegen die vertikalen Ebenen bevorzugt in gleichmäßigen Winkelabständen um den Schnittpunkt 4 zueinander. Es versteht sich, dass der Schnittpunkt 4 sich hier in einer vertikalen Richtung erstreckt, sodass auch von einer vertikalen Schnittline gesprochen werden kann, da sich die Fachwerkskonstruktionen in die vertikale Richtung erstrecken. Die Strebe 8 durchsetzt bevorzugt die gesamte Fachwerkskonstruktion, oder die Strebe 8 könnte auch nur am obersten Punkt der Fachwerkskonstruktion ansetzen.

Die Fachwerkskonstruktionen werden üblicherweise jeweils durch einen untersten Träger 5 und einen obersten Träger 5 gebildet, zwischen denen Hilfsträger 5` vorgesehen sind. Die Strebe 8 ist bevorzugt am Schnittpunkt 4 sowohl mit dem obersten Träger 5 als auch mit dem untersten Träger 5 der Fachwerkskonstruktionen verbunden. Im Allgemeinen könnten die Hilfsträger 5` gleich wie die untersten und obersten Träger 5 ausgebildet sein, wobei üblicherweise vorgesehen wird, dass die Hilfsträger 5` dünner als die untersten und obersten Träger 5 ausgebildet werden. Die untersten und obersten Träger 5 können auch als Profilträger ausgebildet sein, z.B. als I-Träger oder T-Träger, und die Hilfsträger 5` können profillos, z.B. mit rundem oder rechteckigem Querschnitt, ausgebildet sein.

In der Ausführungsform der Figuren 1 bis 3 liegen die untersten Träger 5 der mehreren Fachwerkskonstruktionen in einer gemeinsamen Ebene E, die üblicherweise horizontal verläuft. Man könnte auch definieren, dass die Unterkanten der untersten Träger 5 in einer gemeinsamen Ebene E liegen. Weiters optional könnten auch die obersten Träger 5 in einer gemeinsamen Ebene liegen (z.B. wenn die untersten Träger 5 unterhalb jener horizontalen Ebene liegen, die durch die Oberkante des Behälters verläuft). Wie dargestellt ist jedoch bevorzugt, wenn die Fachwerkskonstruktionen im Bereich des freien Endes 6 der Träger 5 eine geringere Höhe aufweisen als im Bereich des Schnittpunkts 4, was z.B. dadurch erzielt werden kann, dass die obersten Träger 5 geknickt ausgestaltet sind, siehe die Figuren 1 und 3. Bei derartigen Ausführungen liegen üblicherweise nur die untersten Träger 5 der Fachwerkskonstruktionen in einer gemeinsamen Ebene E.

Im Gegensatz dazu sind bei der Ausführungsform der Figur 4 keine der Träger 5 Teil einer Fachwerkskonstruktion. In anderen Worten sind die Träger 5 die einzigen Träger 5 innerhalb einer vertikalen Ebene, die durch die jeweiligen Träger 5 verläuft. Bevorzugt ist, wenn diese Träger 5 Profilträger wie I-Träger oder T-Träger sind. Derartige Ausführungen ohne Fachwerkskonstruktion eignen sich, im Vergleich zu Ausführungen mit Fachwerkskonstruktion, insbesondere für Behälter 3 mit kleinerem Durchmesser, da eine geringere Gewichtskraft aufgenommen werden muss und ohne Fachwerkskonstruktion Baumaterial für die Träger 5 eingespart werden kann.

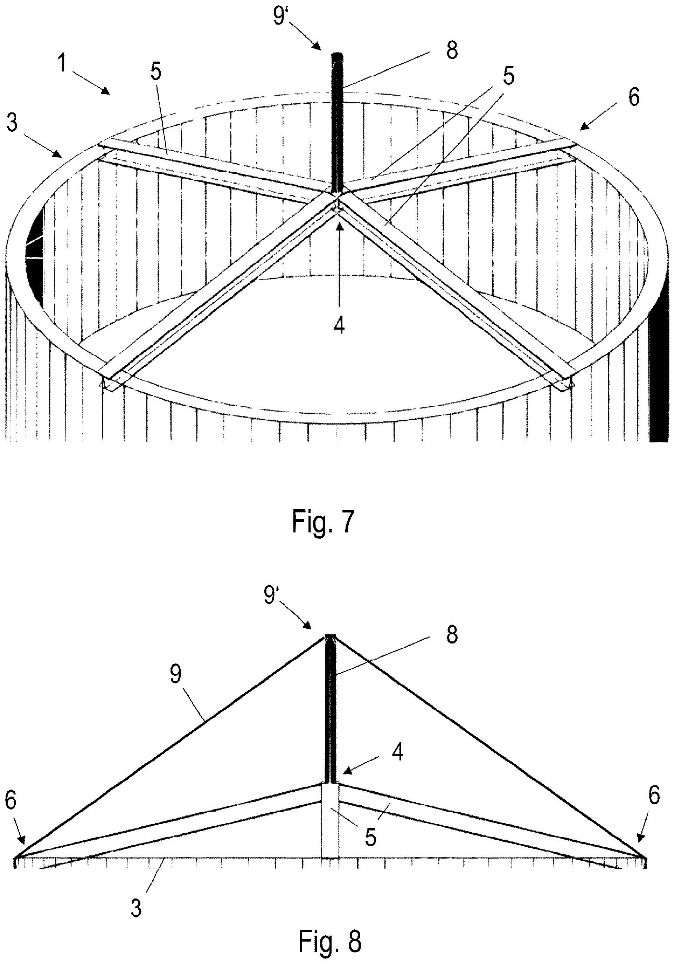

Aus Figur 4 ist außerdem ersichtlich, dass alle Träger 5 in einer gemeinsamen Ebene E liegen. Man könnte auch definieren, dass die Unterkanten aller Träger 5 in einer gemeinsamen Ebene E liegen. Wie weiter unten anhand der Figuren 7 bis 11 erläutert wird, könnte jedoch auch vorgesehen werden, dass die Träger 5 geneigt sind und z.B. in einer Kegelform bzw. Pyramidenform angeordnet sind, deren Spitze sich nach oben erstreckt, wobei in diesem Fall die Strebe 8 an der Spitze der Form ansetzt. Die durch die Dachplane 9 gebildete Kegelform oder Pyramidenform liegt hierbei weiterhin über der durch die Träger 5 gebildete Form. Dies kann auch auf die Ausführungsform der Figuren 1 bis 3 angewandt werden, wo zumindest die untersten Träger 5 in einer gemeinsamen Ebene liegen oder die untersten Träger 5 in einer Kegelform ausgeführt sein könnten.

Aus den Figuren 1 bis 4 ist auch ersichtlich, dass die Oberkanten der freien Enden 6 der Träger 5 bevorzugt nicht über den Behälter 3 hinausragen, d.h. die Oberkanten der freien Enden 6 liegen bevorzugt unterhalb der horizontalen Ebene durch die Behälteroberkante. Dadurch liegen die Unterkanten aller Träger bzw. der untersten Träger in einem Abstand unterhalb einer horizontalen Ebene durch die Behälteroberkante. Es versteht sich, dass das Tragegerüst 1 auch beliebig nach unten versetzt werden könnte, z.B. wenn dies durch die Anbindung der freien Enden 6 an den Behälter 3 erforderlich gemacht wird.

Die Komponenten des Tragegerüsts 1, d.h. die Träger 5, gegebenenfalls die Hilfsträger 5` und/oder die Strebe 8 werden üblicherweise aus Stahl, bevorzugt nichtrostender Stahl (NiRoSta), gefertigt und bei Bedarf auch verzinkt, lackiert oder mit einem anderen Schutz gegen Korrosion versehen. In alternativen Konstruktionen könnten einige oder alle dieser Komponenten jedoch auch aus Holz, Kunststoff oder Kompositmaterialien hergestellt werden, z.B. um ein geringeres Gewicht zu reduzieren.

Wie dargestellt bildet in den Figuren 1 bis 6 das obere Ende der Strebe 8 einen Montagepunkt 9', an dem die Dachplane 9 befestigt ist. Alternativ könnte die Strebe 8 in vertikaler Richtung auch über den Montagepunkt 9` herausragen, an dem die Dachplane 9 befestigt sind. Die Strebe 8 könnte auch in vertikaler Richtung mehrere Eingriffspunkte aufweisen, damit der Montagepunkt 9 frei wählbar ist und leicht verstellt werden kann.

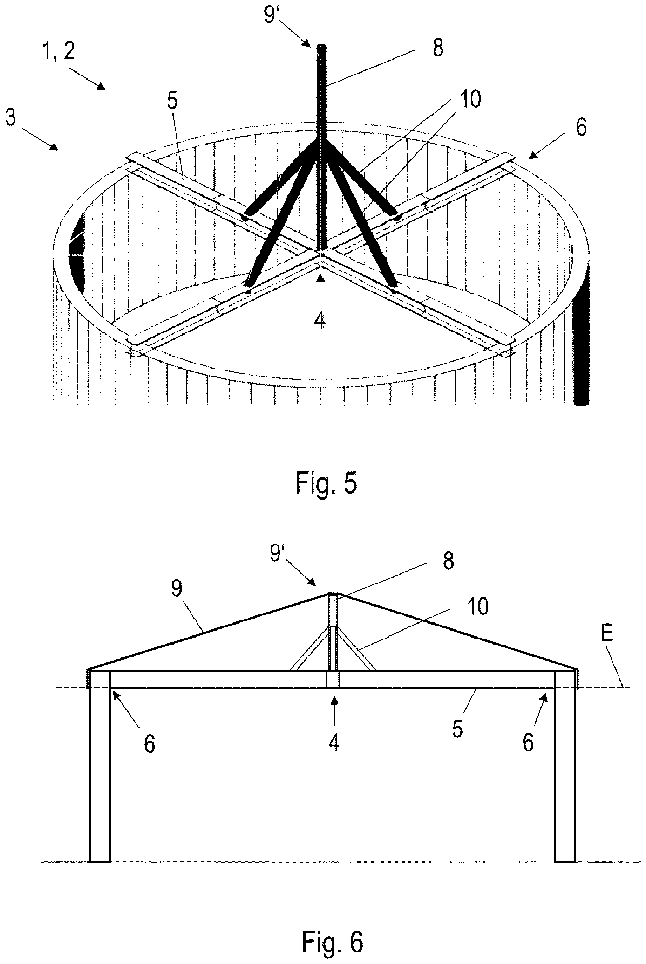

In den Figuren 5 und 6 ist weiters dargestellt, dass das Tragegerüst 1 zusätzliche Verstärkungsstreben 10 aufweisen kann, die jeweils zwischen einem der Träger 5 und der Strebe 8 verlaufen. Es ist ersichtlich, dass diese Verstärkungsstreben 10 eine zusätzliche Versteifung der Strebe 8 bewirken, sodass die Strebe 8 z.B. höher oder dünner ausgeführt werden kann. In der Ausführungsform der Figuren 5 und 6 sind die Verstärkungsstreben 10 in Kombination mit Profilträgern eingesetzt, jedoch könnten diese auch in Kombination mit Fachwerkskonstruktionen wie in den Figuren 1 bis 3 eingesetzt werden.

Die Figuren 7 und 8 zeigen, dass die Träger 5 nicht in einer gemeinsamen Ebene liegen müssen, sondern auch in einem Winkel zueinander angeordnet werden können. Dadurch können die Träger 5 in einer Kegelform bzw. Pyramidenform angeordnet werden, deren Spitze über dem Behälter 3 bzw. über den freien Enden liegt. Die Strebe 8 setzt an der Spitze der Form an und erstreckt sich ausgehend von dort nach oben, wodurch diese die Dachplane 9 von den Trägern 5 beabstanden kann. Die durch die Dachplane 9 gebildete Kegelform oder Pyramidenform liegt somit berührungslos über der durch die Träger 5 gebildete Kegelform oder Pyramidenform. Auch bei diesen Ausführungsformen können Fachwerkskonstruktionen vorgesehen werden, wobei die untersten Träger 5 der Fachwerkskonstruktionen die Kegelform bzw. Pyramidenform bilden.

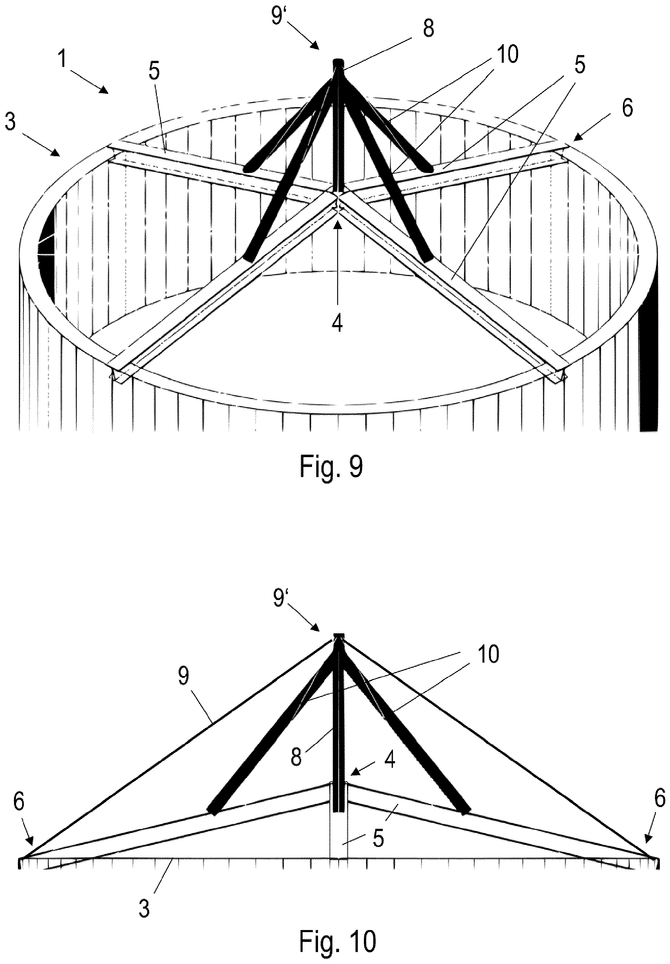

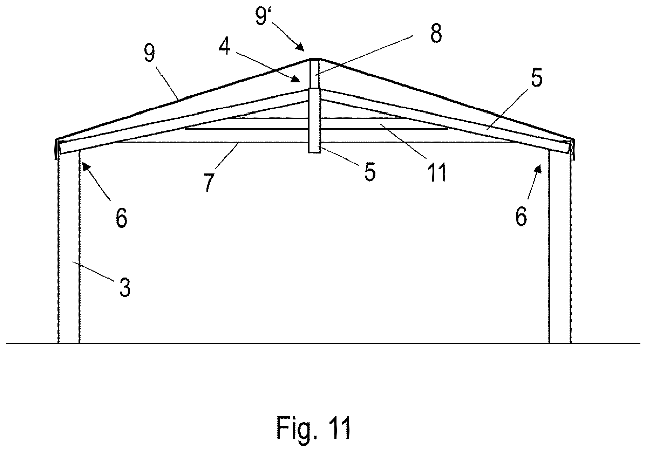

Die Figuren 9 und 10 zeigen, dass die Ausführungsform der Figuren 7 und 8 auch mit Verstärkungsstreben 10 kombiniert werden kann. Die Figur 11 zeigt eine weitere Ausführungsform, aus der ersichtlich ist, dass bei in einem Winkel zueinander angeordneten Trägern 5 zusätzliche Verbindungsträger 11 vorgesehen werden können. Die Verbindungsträger 11 liegen in einer horizontalen Ebene und verbinden jeweils zwei Träger 5, kontaktieren jedoch nicht den Behälter 3. Bevorzugt verbinden die Verbindungsträger 11 zwei gegenüberliegende Träger 5 und verlaufen somit durch die im Wesentlichen vertikale Symmetrieachse des Tragegerüsts 1. Die Verbindungsträger 11 könnten jedoch auch zwei nebeneinanderliegende Träger 5 miteinander verbinden und so als Querstreben bzw. Querträger eingesetzt werden.

Die Größe des hierin beschriebenen Behälters 3 kann im Wesentlichen beliebig sein, da die Vielzahl der hierin vorgestellten Variationen der Tragegerüste 1 eine geeignete Anpassung an fast alle gängigen Behältertypen ermöglicht. In der Regel gilt, dass umso mehr Träger 5 und umso größere Fachwerkskonstruktionen eingesetzt werden, je größer der Durchmesser des Behälters 3 ist bzw. umso größer die erwartete Schneebelastung und/oder Windbelastung ist. Auch die Größe der Strebe 8, bzw. genauer der Abstand des Montagepunkts 9` zur horizontalen Ebene durch die Behälteroberkante, kann gewählt werden, um der Größe des Behälters 3 Rechnung zu tragen.

Das Nachrüsten eines Behälters 3 mit einem erfindungsgemäßem Dach 2 kann wie folgt erfolgen. Üblicherweise wird eingangs eine statische Berechnung durchgeführt, ausgehend von einer erwarteten Schneelast und Windlast, und auf dieser Basis wird die Form des Tragegerüsts 1 gewählt. Dieses Tragegerüst 1 wird daraufhin auf den Behälter 3 montiert. Danach wird die Dachplane 9 zwischen Tragegerüst 1 und Behälter 3 gespannt, indem die Mitte der Dachplane 9 an einem Montagepunkt 9` auf die Strebe 8 montiert wird und die Seiten der Dachplane 9 an den Behälter 3 gespannt werden. Alternativ können auch zuerst die Seiten der Dachplane 9 an den Behälter montiert werden und danach wird die Mitte der Dachplane 9 auf der Strebe 8 bis zum Montagepunkt 9` hinaufgezogen. Im gespannten Zustand der Dachplane 9 zwischen Strebe 8 und Behälter 3 liegt die Dachplane 9 berührungslos zu den Trägern 5 vor.

## Patentansprüche

1. Tragegerüst (1) für ein Dach (2) für einen nach oben offenen Behälter (3), insbesondere für einen Behälter (3) für landwirtschaftliche Betriebsmittel wie Jauche oder für industrielle Betriebsmittel, mit mehreren, sich in einem Schnittpunkt (4) kreuzenden Trägern (5), wobei jeder der Träger (5) zumindest ein freies Ende (6) aufweist, welches mit dem Behälter (3) verbindbar ist,
**dadurch gekennzeichnet, dass**
das Tragegerüst (1) eine Strebe (8) für eine selbsttragende Dachplane (9) aufweist,
wobei sich die Strebe (8) vom Schnittpunkt (4) der Träger (5) im Wesentlichen vertikal nach oben erstreckt, um dort einen Montagepunkt (9`) für eine selbsttragende, von den Trägern (5) beabstandete Dachplane (9) zu bilden.

2. Tragegerüst (1) gemäß Anspruch 1, wobei zumindest einige Träger (5) des Tragegerüsts (1) im Wesentlichen in einer Ebene (E) angeordnet sind, wobei bevorzugt alle Träger des Tragegerüsts (1) oder zumindest die untersten Träger des Tragegerüsts (1) im Wesentlichen in einer Ebene (E) angeordnet sind.

3. Tragegerüst (1) gemäß Anspruch 1, wobei zumindest einige Träger (5) des Tragegerüsts (1) in einer Pyramidenform oder Kegelform angeordnet sind, dessen Spitze den Schnittpunkt (4) bildet und über den freien Enden (6) angeordnet ist, wobei bevorzugt alle Träger des Tragegerüsts (1) oder zumindest die untersten Träger des Tragegerüsts (1) in einer Pyramidenform oder Kegelform angeordnet sind.

4. Tragegerüst (1) gemäß einem der Ansprüche 1 bis 3, wobei die Träger (5) Profilträger, bevorzugt I-Träger, H-Träger, insbesondere HEA-Träger, oder T-Träger, oder Vollträger sind.

5. Tragegerüst (1) gemäß einem der Ansprüche 1 bis 4, wobei die Träger (5) Teil von Fachwerkskonstruktionen sind, die in im Wesentlichen vertikalen Ebenen liegen.

6. Tragegerüst (1) gemäß Anspruch 5, wobei die Fachwerkskonstruktionen im Bereich des freien Endes (6) der Träger (5) eine geringere Höhe aufweisen als im Bereich des Schnittpunkts (4).

7. Tragegerüst (1) gemäß einem der Ansprüche 1 bis 6, wobei das Tragegerüst (1) vier jeweils gleich lange Träger (5) oder vier jeweils gleich lange Fachwerkskonstruktionen aufweist, welche sich ausgehend von dem Schnittpunkt (4) in regelmäßigen Abständen nach außen erstrecken.

8. Tragegerüst (1) gemäß einem der Ansprüche 1 bis 7, wobei die Träger (5) und/oder die Strebe (8) zumindest teilweise aus Stahl, Holz oder Kunststoff gefertigt sind und bevorzugt verzinkt, lackiert oder mit einer sonstigen Antikorrosionsbeschichtung versehen sind.

9. Tragegerüst (1) gemäß einem der Ansprüche 1 bis 8, ferner umfassend zumindest eine Verstärkungsstrebe (10), die sich zwischen der Strebe (8) und einem Träger (5) oder einer Fachwerkskonstruktion erstreckt, wobei bevorzugt für jeden Träger (5) oder für jede Fachwerkskonstruktion eine Strebe (8) vorgesehen ist.

10. Dach (2) für einen nach oben offenen Behälter (3) mit einem Tragegerüst (1) gemäß einem der Ansprüche 1 bis 9, wobei das Dach (2) ferner die Dachplane (9) umfasst.

11. Dach (2) gemäß Anspruch 10, wobei die Dachplane (9) ein polyesterbeschichtetes oder PVC-beschichtetes Gewebe umfasst.

12. Dach (2) gemäß Anspruch 10 oder 11 für einen nach oben offenen Behälter (3) mit runder Querschnittsfläche, wobei die Dachplane (9) im montierten Zustand eine Kegelform einnimmt.

13. Dach (2) gemäß Anspruch 10 oder 11 für einen nach oben offenen Behälter mit rechteckiger oder quadratischer Querschnittsfläche, wobei die Dachplane (9) im montierten Zustand eine Pyramidenform einnimmt.

14. Dach (2) gemäß einem der Ansprüche 10 bis 13, wobei die Dachplane (9) ein Flächengewicht von 200 bis 1500 g/m²

15. Behälter (3) mit einem Dach (2) gemäß einem der Ansprüche 10 bis 14, wobei die freien Enden (6) der Träger (5) des Tragegerüsts (1) mit dem Behälter (3) verbunden sind, und die Dachplane (9) beabstandet von den Trägern (5) an ihrer Mitte an der Strebe (8) und an ihren Seiten am Behälter (3) montiert ist.
